(19) Europäisches Patentamt
European Patent Office
Office européen des brevets

(11) **EP 4 738 672 A1**

(12) **EUROPEAN PATENT APPLICATION**

(43) Date of publication:
06.05.2026 Bulletin 2026/19

(21) Application number: 25153122.4

(22) Date of filing: 21.01.2025

(51) International Patent Classification (IPC):
*H02M 1/00* (2006.01)   *H02M 3/156* (2006.01)

(52) Cooperative Patent Classification (CPC):
H02M 1/0025; H02M 3/156

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 29.10.2024 CN 202411517984

(71) Applicant: Delta Electronics, Inc.
Taoyuan City 333 (TW)

(72) Inventors:
• CHOU, Ming-Wei
333 Taoyuan (TW)
• CHEN, Sheng-Jian
333 Taoyuan (TW)
• HSU, Chia-Chang
333 Taoyuan (TW)

(74) Representative: Nederlandsch Octrooibureau
P.O. Box 29720
2502 LS The Hague (NL)

Remarks:
Amended claims in accordance with Rule 137(2) EPC.

(54) **POWER SUPPLY AND OPERATING METHOD THEREOF**

(57) A power supply includes a power converter, a feedback circuit, a control signal generating circuit and a compensating circuit. The power converter generates an output voltage at an output node. The feedback circuit generates a feedback signal according to an output node voltage. The control signal generating circuit provides a control signal to the power converter according to the feedback signal. The compensating circuit includes a reference voltage circuit, a voltage dividing circuit and a switching circuit. When the output node voltage is decreased from the first voltage level to a level threshold or decreased from the first voltage level by an amplitude threshold, the switching circuit is conducted to couple the feedback circuit to the voltage dividing circuit, so the feedback circuit sets the control signal generating circuit to increase a duty cycle of the control signal and/or decrease a frequency of the control signal.

Fig. 1

Processed by Luminess, 75001 PARIS (FR)

## Description

## BACKGROUND

Field of Invention

This disclosure relates to a power supply, and in particular to a power supply that can quickly compensate for output node voltage changes.

Description of Related Art

A power supply can be configured to convert voltage and provide stable voltage to a load. However, when the load of the power supply is a device such as a motor, or when multiple power supplies are connected in parallel, the output of the power supply may be higher than a preset output voltage due to reasons such as back electromotive force generated by the motor or abnormal operation of one of the multiple power supplies. For example: the default output voltage value of the power supply is 24V, but due to the abnormal operation of other power supplies connected in parallel, the voltage value of the output terminal of the power supply becomes 30V. For ease of explanation, the situation in which the voltage at the output terminal of the power supply is pulled up due to external factors is referred to as "voltage external sinking". When the voltage external sinking phenomenon occurs in a well-known power supply, the voltage value at the output terminal may be increased significantly, and causing the power supply to reduce power supplying or suspend power supplying. When the voltage external sinking phenomenon disappears, it will take a certain reaction time for the power supply to return to the normal power supply state from reducing the power supplying or suspending the power supplying. As a result, the voltage at the output terminal may drop significantly, or even drop below the load-tolerable specifications, and causing malfunction or damage to the load.

## SUMMARY

How to solve the technical problems mentioned above which caused by voltage external sinking to the power supply is an important issue that needs to be solved in this art.

The present disclosure provides a power supply is coupled to an output node to supply power to a load. The power supply includes a power converter, a feedback circuit, a control signal generating circuit, and a compensating circuit. The power converter is configured to generate an output voltage at the output node according to an input voltage. The feedback circuit is coupled to the output node and configured to correspondingly generate a feedback signal according to an output node voltage of the output node. The control signal generating circuit is coupled to the power converter, and configured to correspondingly provide a control signal to the power converter according to the feedback signal, to generate the output voltage. The compensating circuit is coupled between the output node and the feedback circuit. The compensating circuit include a reference voltage circuit, a voltage dividing circuit, and a switching circuit. The reference voltage circuit is coupled to the output node, and configured to correspondingly generate a reference voltage according to the output node voltage. The voltage dividing circuit is coupled to the reference voltage circuit, and configured to correspondingly generate a divided voltage according to the reference voltage. The switching circuit, coupled to the voltage dividing circuit and the feedback circuit. When the output node voltage is increased from a preset voltage level to a first voltage level and is then decreased from the first voltage level to a level threshold or decreased from the first voltage level by an amplitude threshold, the switching circuit is conducted to couple the feedback circuit to the voltage dividing circuit, so that the feedback circuit sets the control signal generating circuit to correspondingly increase a duty cycle of the control signal and/or decrease a frequency of the control signal.

The present disclosure provides an operating method of a power supply. The power supply is coupled to an output node to supply power to a load, the power supply includes a power converter coupled to the output node, a feedback circuit coupled to the output node, a control signal generating circuit coupled to the power converter, and a compensating circuit coupled to the output node and the feedback circuit. The compensating circuit includes a reference voltage circuit coupled to the output node, a voltage dividing circuit coupled to the reference voltage circuit, and a switching circuit coupled to the voltage dividing circuit and the feedback circuit. The operating method includes: by setting the power converter, generating an output voltage at the output node according to an input voltage; by setting the feedback circuit, correspondingly generating a feedback signal according to an output node voltage of the output node; by setting the control signal generating circuit, correspondingly providing a control signal to the power converter according to the feedback signal, to generate the output voltage; by setting the reference voltage circuit, correspondingly generating a reference voltage according to the output node voltage; and by setting the voltage dividing circuit, correspondingly generating a divided voltage according to the reference voltage. When the output node voltage is increased from a preset voltage level to a first voltage level and is then decreased from the first voltage level to a level threshold or decreased from the first voltage level by an amplitude threshold, the switching circuit is conducted to couple the feedback circuit to the voltage dividing circuit, so that the feedback circuit sets the control signal generating circuit to correspondingly increase a duty cycle of the control signal and/or decrease a frequency of the control signal.

The power supply and the operating method thereof in the present disclosure can quickly adjust the output terminal of the power converter to the required voltage and/or current by controlling the feedback voltage through the compensating circuit right after the voltage external sink phenomenon disappears. Therefore, the power supply of the present disclosure has the advantageous technical effect of quickly stabilizing the output node voltage.

## BRIEF DESCRIPTION OF THE DRAWINGS

Fig. 1 is a block diagram of a power supply system in accordance with some embodiments of the present disclosure.

Fig. 2A is a waveform diagram of voltage of an output node of a power supply in accordance with the related art.

Fig. 2B is a waveform diagram of voltage of an output node of a power supply in accordance with some embodiments of the present disclosure.

Fig. 3 is a block diagram of a compensating circuit and a feedback circuit in accordance with some embodiments of the present disclosure.

Fig. 4 is a partial circuit diagram of the compensating circuit and the feedback circuit in accordance with the embodiments of Fig. 3.

Fig. 5 is a partial circuit diagram of a feedback circuit in accordance with some embodiments of the present disclosure.

## DETAILED DESCRIPTION

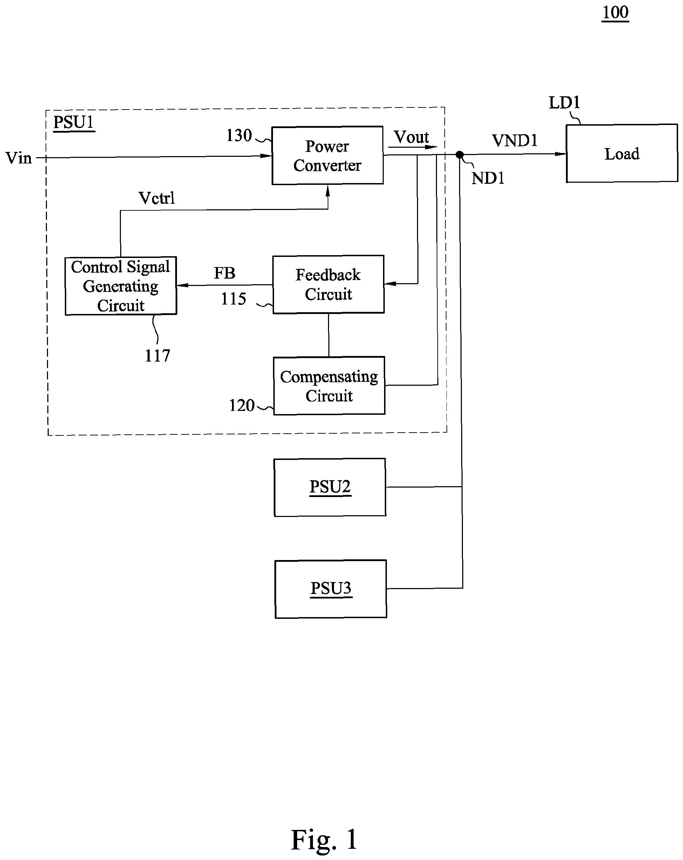

Fig. 1 is a block diagram of a power supply system 100 in accordance with some embodiments of the present disclosure. In this embodiment, the power supply system 100 includes power supplies PSU1 to PSU3. The power supplies PSU1 to PSU3 are connected in parallel to supply power to a load LD1. For example, the power supplies PSU1 to PSU3 are respectively coupled to a bus bar through connectors to supply power to the load LD1. The power supply PSU1 is coupled to the load LD1 through an output node ND1. The power supply PSU1 includes a feedback circuit 115, a control signal generating circuit 117, a compensating circuit 120 and a power converter 130. The feedback circuit 115 is coupled to the output node ND1 and the control signal generating circuit 117. The compensating circuit 120 is coupled to the output node ND1 and the feedback circuit 115. The power converter 130 is coupled to the control signal generating circuit 117 and the output node ND1. The power converter 130 may be an AC-DC converter, a DC-DC converter or other suitable power converter.

The number of power supplies in the power supply system 100 is not limited to three. In some embodiments, the number of power supplies in the power supply system 100 is only one. For example, the power supply system 100 only includes the power supply PSU1. In these embodiments, the output node ND1 of the power supply system 100 may also experience voltage external sinking phenomenon due to reasons such as the back electromotive force generated by the load LD1.

As shown in Fig. 1, the power converter 130 receives an input voltage Vin, converts the input voltage Vin into an output voltage Vout, and transmits the output voltage Vout to the output node ND1 to generate an output node voltage VND1 at the output node ND1. The feedback circuit 115 receives the output node voltage VND1 from the output node ND1 and generates a feedback signal FB according to voltage level of the output node voltage VND1. The control signal generating circuit 117 receives the feedback signal FB and generates a control signal Vctrl correspondingly, so as to correspondingly generate the output voltage Vout by controlling the power converter 130.

Following the embodiment above, the control signal generating circuit 117 receives the feedback signal FB and generates the control signal Vctrl according to the feedback signal FB. In some embodiments, when the output node voltage VND1 is increased, the feedback signal FB is adjusted correspondingly, the control signal generating circuit 117 decreases the duty cycle of the control signal Vctrl and/or increases the frequency of the control signal Vctrl to control the power converter 130 to decrease the output node voltage VND1 to a required voltage level. In other embodiments, when the output node voltage VND1 is decreased, the feedback signal FB is adjusted correspondingly, the control signal generating circuit 117 increases the duty cycle of the control signal Vctrl and/or decreases the frequency of the control signal Vctrl to control the power converter 130 to increase the output node voltage VND1 to a required voltage level.

In this embodiment, the control signal Vctrl may be a pulse-width modulation (PWM) signal, a pulse-frequency modulation (PFM) signal, a pulse-skip modulation (PSM) signal or other appropriate signal formats.

For example, when the control signal Vctrl is a pulse width modulation signal, the power converter 130 receives the control signal Vctrl from the control signal generating circuit 117 and adjusts the output voltage Vout according to the control signal Vctrl to make the output node voltage VND1 is adjusted correspondingly. When the control signal generating circuit 117 decreases the duty cycle of the control signal Vctrl, the power converter 130 operates according to the decreased duty cycle, to decrease the output voltage Vout, and the output node voltage VND1 is decreased correspondingly. When the control signal generating circuit 117 increases the duty cycle of the control signal Vctrl, the power converter 130 operates according to the increased duty cycle, to increase the output voltage Vout, and the output node voltage VND1 is increased correspondingly.

The compensating circuit 120 may adjust the feedback signal FB according to the output node voltage VND1. In one embodiment, the output node voltage VND1 of the output node ND1 may be increased due to abnormal operation of the power supply PSU2 and/or the power supply PSU3 or due to the back electromotive force generated by the load LD1. When the voltage external sinking phenomenon disappears, the output node voltage VND1 of the output node ND1 is decreased.

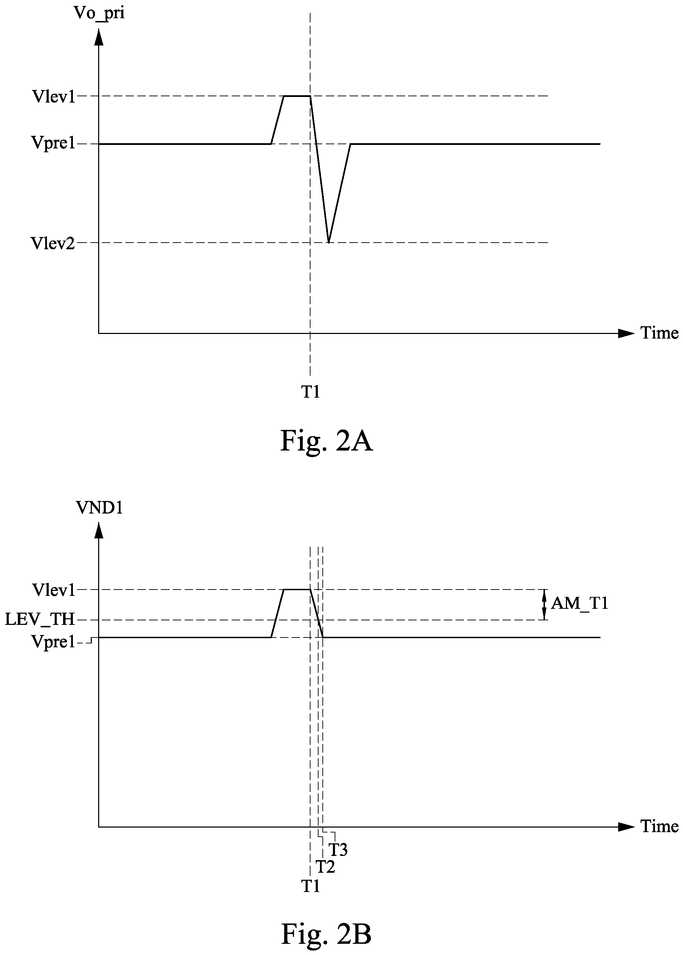

Please refer to Figs. 2A and 2B, Fig. 2A is a waveform diagram of voltage of an output node of a power supply in accordance with the related art, Fig. 2B is a waveform diagram of voltage of an output node ND1 of a power supply PSU1 in accordance with some embodiments of the present disclosure.

In Fig. 2A, when the voltage external sinking phenomenon occurs, an output node voltage Vo_pri of the related art be increased from the preset voltage level Vpre1 preset by the power supply to a voltage level Vlev1. After time point T1, the voltage external sinking phenomenon disappears. Since the power supply of the related art cannot provide power immediately, the output node voltage Vo_pri may drop from the voltage level Vlev1 to a voltage level Vlev2. Moreover, the power supply of the related art can only increase the power supplying capability after a period of time, and the output node voltage Vo_pri can be increased from the voltage level Vlev2 to the preset voltage level Vpre1 when the power supplying capability of the power supply is increased. The voltage level Vlev2 is lower than the preset voltage level Vpre1, which cannot meet the system specifications and may cause malfunction or damage to the load.

In FIG. 2B, when the voltage external sink phenomenon occurs, the output node voltage VND1 of the output node ND1 is also increased from the preset voltage level Vpre1 to the voltage level Vlev1. After time point T1, the voltage external sink phenomenon disappears, the output node voltage VND1 is decreased from the voltage level Vlev1. At time point T2, the compensating circuit 120 detects the drop amplitude of the output node voltage VND1 exceeds the amplitude threshold AM_T1, or detects that the output node voltage VND1 is decreased below the level threshold LEV_TH. Accordingly, the compensating circuit 120 can control the feedback circuit 115 to generate the feedback signal FB correspondingly, so that the control signal generating circuit 117 performs operations, such as increasing the duty cycle of the control signal Vctrl and/or decreasing the frequency of the control signal Vctrl, according to the feedback signal FB. During the period from time point T2 to time point T3, the power converter 130 operates according to the operations, such as increasing the duty cycle of the control signal Vctrl and/or decreasing the frequency of the control signal Vctrl, so as to quickly increase the capability for supplying the output node ND1. After the time point T3, the voltage of the output node ND1 stops decreasing and remains at the preset voltage level Vpre1. Therefore, the output node voltage VND1 may not be lower than the preset output voltage of the power supply system 100. In another embodiment, the output node voltage VND1 of the output node ND1 may first be lower than the preset voltage level Vpre1 of the power supply system 100 (but still within the allowable range of the system), and then is increased to the preset voltage level Vpre1. In the embodiment of Figs. 2A and 2B, the voltage of the output node is represented by a straight line for ease of explanation. In fact, the voltage of the output node (e.g., the output node voltage Vo_pri, the output node voltage VND1, etc.) may not change linearly as shown in Figs. 2A and 2B.

In this embodiment, the level threshold LEV_TH of the compensating circuit 120 may be set between the voltage level Vlev1 and the preset voltage level Vpre1. Alternatively, the amplitude threshold AM_T1 may be set by the compensating circuit 120, and the amplitude threshold AM_T1 may be the voltage difference from the preset voltage level Vpre1 to the level threshold LEV_TH.

In summary, the power supply PSU1 in Fig. 1 adjusts the feedback signal FB immediately through the compensating circuit 120 after the voltage external sinking phenomenon disappears, so that the power converter 130 operates according to the operations, such as increasing the duty cycle and/or decreasing the frequency of the control signal Vctrl, before the output node voltage VND1 of the output node ND1 is decreased to the preset voltage level Vpre1. Therefore, after the voltage external sinking phenomenon disappears, by the power supply system 100, the output node voltage VND1 is not lower than the preset voltage level Vpre1 or is only slightly lower than the preset voltage level Vpre1, and the power supply system 100 has the advantage of stabilizing the output node voltage.

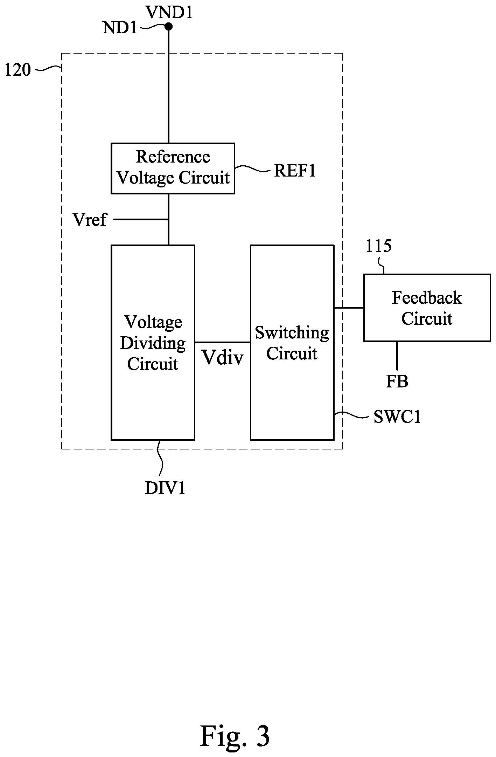

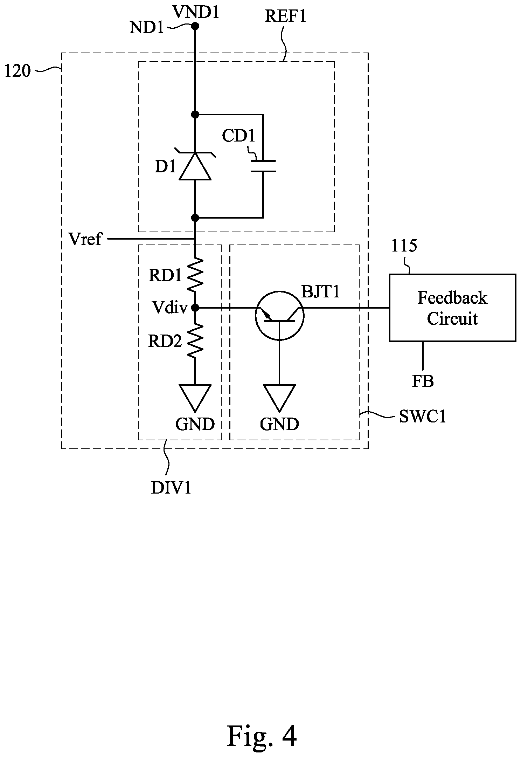

Fig. 3 is a block diagram of the compensating circuit 120 and the feedback circuit 115 in accordance with some embodiments of the present disclosure. Fig. 4 is a partial circuit diagram of the compensating circuit 120 and the feedback circuit 115 in accordance with the embodiments of Fig. 3.

In the embodiment of Fig. 3, the compensating circuit 120 includes a reference voltage circuit REF1, a voltage dividing circuit DIV1 and a switching circuit SWC1. The reference voltage circuit REF1 is coupled to the output node ND1. The voltage dividing circuit DIV1 is coupled to the reference voltage circuit REF1. The switching circuit SWC1 is arranged between the voltage dividing circuit DIV1 and the feedback circuit 115. The reference voltage circuit REF1 sets a reference voltage Vref according to the output node voltage VND1. The voltage dividing circuit DIV1 generates a divided voltage Vdiv according to the reference voltage Vref. The switching circuit SWC1 receives the divided voltage Vdiv from the voltage dividing circuit DIV1, and determines whether to be conducted according to the divided voltage Vdiv.

In the embodiment of Fig. 4, the reference voltage circuit REF1 includes a diode D1 and a capacitor CD1. A cathode terminal of the diode D1 is coupled to the output node ND1, and an anode terminal of the diode D1 is coupled to the voltage dividing circuit DIV1. A first terminal of the capacitor CD1 is coupled to the output node ND1, and a second terminal of the capacitor CD1 is coupled to the anode terminal of the diode D1. The capacitor CD1 can be configured to store charges, and the voltage at the point where the capacitor CD1 and the voltage dividing circuit DIV1 are connected is the reference voltage Vref. The diode D1 can be a Zener diode, and a limit voltage value can be set by selecting an appropriate voltage level of the breakdown voltage of the diode D1, so that the limit voltage value is greater than or equal to the preset voltage level Vpre1 of the output node ND1.

The voltage dividing circuit DIV1 includes a resistor RD1 and a resistor RD2. A first terminal of the resistor RD1 is coupled to the reference voltage circuit REF1, and a second terminal of the resistor RD1 is coupled to a first terminal of the resistor RD2. A second terminal of the resistor RD2 is coupled to a ground terminal GND. In this embodiment, the voltage on the first terminal of the resistor RD2 is the divided voltage Vdiv, and the divided voltage Vdiv can be expressed by formula (1).

$$\text{Vdiv} = \text{Vref} \times \frac{RD2}{RD1 + RD2} \quad \text{formula (1)}$$

The switching circuit SWC1 includes a transistor BJT1. A first terminal of the transistor BJT1 is coupled to the second terminal of the resistor RD1 and the first terminal of the resistor RD2, a second terminal of the transistor BJT1 is coupled to the feedback circuit 115, a third terminal of the transistor BJT1 is coupled to the ground terminal GND. In this embodiment, the transistor BJT1 can be an NPN bipolar junction transistor (BJT), the first terminal of the transistor BJT1 can be an emitter, and the second terminal of the transistor BJT1 can be an collector, and the third terminal of the transistor BJT1 can be a base. The turn-on condition of the transistor BJT1 is that the cross-voltage from the third terminal to the first terminal is greater than a threshold voltage of the transistor BJT1. Since the third terminal of the transistor BJT1 is coupled to the ground terminal GND, the turn-on condition of the transistor BJT1 is that the voltage at the first terminal is lower than the negative threshold voltage of the transistor BJT1 (i.e., the threshold voltage of the transistor BJT1 multiplied by -1).

Since the first terminal of the transistor BJT1 is coupled to the first terminal of the resistor RD2, the voltage at the first terminal of the transistor BJT1 is equal to the divided voltage Vdiv. In other words, the turn-on condition of the transistor BJT1 may be that the divided voltage Vdiv is lower than the negative threshold voltage of the transistor BJT1. Moreover, the divided voltage Vdiv is generated according to the reference voltage Vref, and the reference voltage Vref can be affected by the output node voltage VND1. The voltage value of the divided voltage Vdiv may correspond to the output node voltage VND1, and can be used to determine whether the transistor BJT1 is conducted. From the above descriptions and formula (1), it can be seen that the turn-on condition of transistor BJT1 is as described in formula (2), where "Vth" in formula (2) represents the threshold voltage of the transistor BJT1.

$$\text{Vref} < -\text{Vth} \times \frac{RD1 + RD2}{RD2} \quad \text{formula (2)}$$

In the embodiments of Fig. 3 and Fig. 4, when the output node voltage VND1 on the output node ND1 is substantially the preset voltage level Vpre1, since the limit voltage value of the reference voltage circuit REF 1 (for example, the breakdown voltage of the diode D 1) is set to be greater than or equal to the preset voltage level Vpre1, the switching circuit SWC1 is not conducted because of at least one of the following reasons: (1) the reference voltage Vref and the corresponding divided voltage Vdiv are substantially equal to the voltage of the ground terminal GND, and (2) the voltage difference between the voltage of the ground terminal GND and the divided voltage Vdiv is lower than the threshold voltage of the transistor BJT1 (for example, Vgnd-Vdiv<Vth or Vdiv>Vgnd-Vth, where Vgnd used herein refers to the voltage of the ground terminal GND).

When the output node voltage VND1 on the output node ND1 is increased from the preset voltage level Vpre1 to the voltage level Vlev1 (as shown in Fig. 2B), the voltage level Vlev1 is greater than the breakdown voltage of the diode D1, and the diode D1 is operated in the reverse conduction mode. The voltage difference across the capacitor CD1 is equal to the breakdown voltage of the diode D1. At this time, the reference voltage Vref is equal to the output node voltage VND1 minus the breakdown voltage. Since the output node voltage VND1 minus the breakdown voltage is a positive value, the divided voltage Vdiv generated by the voltage dividing circuit DIV1 according to the reference voltage Vref is at a positive voltage level, and the voltage difference between the voltage of the ground terminal GND and the divided voltage Vdiv is lower than the threshold voltage of the transistor BJT1. Therefore, the transistor BJT1 is not conducted, so that the switching circuit SWC1 is not conducted.

In the condition that the voltage external sinking phenomenon disappears (such as at the time point T1 shown in Fig. 2B), when the output node voltage VND1 on the output node ND1 is decreased from the voltage level Vlev1 and becomes lower than the breakdown voltage of the diode D1, the diode D1 is not operated in the reverse conduction mode. At this time, since the output node voltage VND1 is lower than the breakdown voltage of the diode D1, the output node voltage VND1 minus the breakdown voltage is a negative value. Therefore, the reference voltage Vref is at a negative voltage level, and the divided voltage Vdiv also is at a negative voltage level. When the output node voltage VND1 is decreased to make the reference voltage Vref be decreased, the voltage difference between the ground terminal GND and the divided voltage Vdiv becomes greater than the threshold voltage of the transistor BJT1. Since the voltage difference between the ground terminal GND and the divided voltage Vdiv is greater than the threshold voltage of the transistor BJT1, the transistor BJT1 and the switching circuit SWC1 are conducted, so that the voltage dividing circuit DIV1 is connected to the feedback circuit 115. Therefore, the feedback circuit 115 can react immediately to the decreasing of the output node voltage VND1 by adjusting the feedback signal FB correspondingly.

When the control signal generating circuit 117 increases the duty cycle of the control signal Vctrl and/or decreases the frequency of the control signal Vctrl according to the feedback signal FB (at least one of them can be adopted according to the circuit architecture of the power converter 130), the power supplying capability of the converter 130 may be increased, and the output voltage Vout of the power converter 130 may eventually return to the preset voltage level Vpre1. Therefore, the divided voltage Vdiv may be higher than the negative threshold voltage of the transistor BJT1, and the transistor BJT1 and the switching circuit SWC1 may not be conducted.

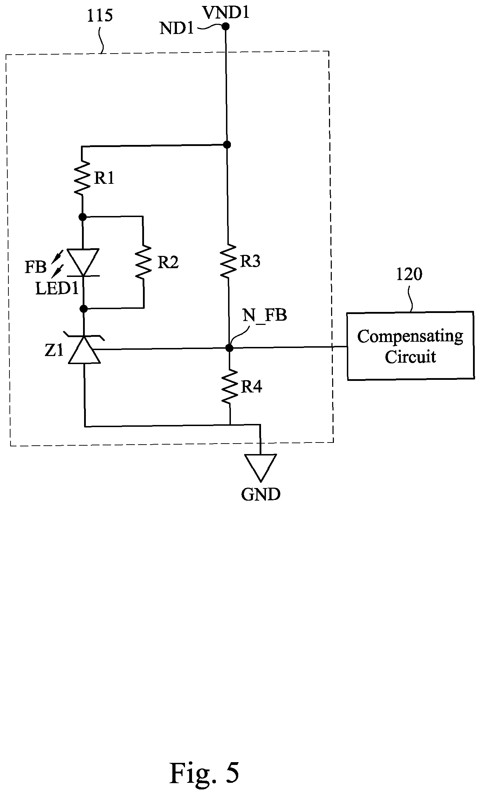

Fig. 5 is a partial circuit diagram of a feedback circuit 115 in accordance with some embodiments of the present disclosure.

The feedback circuit 115 includes a shunt regulator Z1, resistors R1 to R4, and a light-emitting diode LED1. A first terminal of the resistor R1 is coupled to the output node ND1, and a second terminal of the resistor R1 is coupled to a first terminal of the resistor R2 and an anode terminal of the light-emitting diode LED1. A second terminal of the resistor R2 and a cathode terminal of the light-emitting diode LED1 are coupled to a cathode terminal of the shunt regulator Z1. A control terminal of the shunt regulator Z1 is coupled to a feedback node N_FB, and the anode terminal of the shunt regulator Z1 is coupled to the ground terminal GND. A first terminal of the resistor R3 is coupled to the output node ND1, and a second terminal of the resistor R3 is coupled to the feedback node N_FB. A first terminal of the resistor R4 is coupled to the feedback node N_FB, and a second terminal of the resistor R4 is coupled to the ground terminal GND.

The feedback circuit 115 in the embodiment of Fig. 5 is implemented by using a shunt regulator and other circuit components. The feedback circuit 115 changes the current flowing through the light-emitting diode LED1 correspondingly according to the output node voltage VND1 of the output node ND1, to adjust the light-emitting signal of the light-emitting diode LED1.

The light-emitting signal is transmitted as the feedback signal FB to the control signal generation circuit 117. Therefore, the control signal generation circuit 117 may correspondingly generate the control signal Vctrl to set the power converter 130 to adjust its output voltage Vout.

In addition, the feedback node N_FB is coupled to the compensating circuit 120. For example, the feedback node N_FB is coupled to the collector of the transistor BJT1 of the switching circuit SWC1 in the embodiment of Fig. 4. When the switching circuit SWC1 of the compensating circuit 120 is not conducted, the output node voltage VND1 on the output node ND1 is divided by the resistors R3 and R4 to set the shunt regulator Z1. While the shunt regulator Z1 is set, the current flow through current flowing through the light-emitting diode LED1 is set to generate the feedback signal FB. When the switching circuit SWC1 of the compensating circuit 120 is conducted, the first terminal of the resistor RD2 of the compensating circuit 120 is electrically conducted to the feedback node N_FB of the feedback circuit 115. Therefore, the equivalent resistance value between the feedback node N_FB and the ground terminal GND (for example, the equivalent resistance value that the resistor RD2 and the resistor R4 are connected in parallel) is smaller than the resistance value of the resistor R4, and the voltage on the feedback node N_FB when the switching circuit SWC1 is conducted is smaller than the voltage on the feedback node N_FB when the switching circuit SWC1 is not conducted. Since that, the shunt regulator Z1 correspondingly increases the current flowing through the light-emitting diode LED1, to make the control signal generating circuit 117 and the power converter 130 immediately start supplying power or increase the power supplying capability.

In one embodiment, at least part of the control signal generation circuit 117 and the feedback circuit 115 are implemented in the form of integrated circuits, so the feedback circuit 115 can correspondingly adjust the feedback signal FB as the output node voltage VND1 changes. However, it is difficult for integrated circuits to adapt to different application scenarios, and cannot quickly cope with the aforementioned instability problem of the output node voltage VND1 caused by the voltage external sinking. In this embodiment of the integrated circuit, the power supply PSU1 of the present disclosure includes a compensating circuit 120. The compensating circuit 120 may be configured to more quickly coordinate with the feedback circuit 115 according to the output node voltage VND1, so as to adjust the feedback signal FB and the output voltage of the power converter 130. After the voltage external sinking phenomenon occurs and disappears, the power supply PSU1 of the present disclosure quickly adjusts the impedance value in the feedback circuit 115 through the compensating circuit 120 (for example, in the embodiment of Fig. 5, the first terminal of the resistor RD2 is connected to the feedback node N_FB of the feedback circuit 115), and correspondingly adjusts the feedback signal FB and increases the duty cycle of the control signal Vctrl and/or decreases the frequency of the control signal Vctrl. Therefore, the power converter 130 starts to supply power or increase the power supplying capability according to the increased duty cycle and/or decreased frequency of the control signal Vctrl, before the output node voltage VND1 is decreased to the preset voltage level Vlev1. In another embodiment, it can also be configured such that when the output node voltage VND1 is decreased more an amplitude threshold AM_T1, the switching circuit SWC1 of the compensating circuit 120 may be conducted, to quickly adjust the impedance value in the feedback circuit 115, and adjust the feedback signal FB and the control signal Vctrl correspondingly. Therefore, the power converter 130 starts to supply power when the duty cycle is increased and/or the frequency is decreased according to the control signal Vctrl, before the output node voltage VND1 is decreased to the preset voltage level Vlev1, and the power converter 130 can also increase the power supplying capability at this time. Therefore, the power supply of the present disclosure has the advantageous technical effect of not allowing the output node voltage to be out of the operating specifications of the power supply system 100.

**Claims**

1. A power supply (100), configured to be coupled to an output node (ND1) to supply power to a load (LD1), and **characterized by** comprising:

   a power converter (130), configured to generate an output voltage (Vout) at the output node according to an input voltage (Vin);
   a feedback circuit (115), coupled to the output node and configured to correspondingly generate a feedback signal (FB) according to an output node voltage (VND1) of the output node;
   a control signal generating circuit (117), coupled to the power converter, and configured to correspondingly provide a control signal (Vctrl) to the power converter according to the feedback signal to generate the output voltage; and
   a compensating circuit (120), coupled between the output node and the feedback circuit, and comprising:

      a reference voltage circuit (REF1), coupled to the output node, and configured to correspondingly generate a reference voltage (Vref) according to the output node voltage;
      a voltage dividing circuit (DIV1), coupled to the reference voltage circuit, and configured to correspondingly generate a divided voltage (Vdiv) according to the reference voltage; and
      a switching circuit (SWC1), coupled to the voltage dividing circuit and the feedback circuit,

   wherein when the output node voltage increases from a preset voltage level (Vpre1) to a first voltage level (Vlev1) and then decreases from the first voltage level to a level threshold (LEV_TH) or decreases from the first voltage level by an amplitude threshold (AM_T1), the switching circuit is conducted to couple the feedback circuit to the voltage dividing circuit, so that the feedback circuit sets the control signal generating circuit to correspondingly increase a duty cycle of the control signal and/or decrease a frequency of the control signal.

2. The power supply of claim 1, wherein when the output node voltage decreases, the feedback circuit generates the feedback signal to correspondingly increase the duty cycle of the control signal and/or decrease the frequency of the control signal, so that the control signal generation circuit sets the power converter to increase the output voltage.

3. The power supply of claim 2, wherein when the output node voltage increases, the feedback circuit generates the feedback signal to correspondingly decrease the duty cycle of the control signal and/or increase the frequency of the control signal, so that the control signal generation circuit sets the power converter to decrease the output voltage.

4. The power supply of claim 1 or 3, wherein the feedback circuit comprises a light-emitting diode (LED1), and the light-emitting diode is configured to correspondingly generate the feedback signal according to a current flowing through the light-emitting diode.

5. The power supply of claim 1 or 4, wherein the voltage divider circuit comprises:

   a first resistor (RD1), coupled to the reference voltage circuit and the switching circuit; and
   a second resistor (RD2), arranged between the switching circuit, the first resistor and a ground terminal (GND),
   wherein when the switching circuit is conducted, the switching circuit couples the second resistor to the feedback circuit to change the current flowing through the light-emitting diode.

6. The power supply of claim 4 or 5, wherein when the switching circuit is conducted, the current flowing through the light-emitting diode is increased, and the control signal generating circuit increases the output voltage of the power converter according to the feedback signal.

7. The power supply of claim 1, wherein the reference voltage circuit comprises:

> a diode (D1), comprising a first terminal coupled to the output node and a second terminal coupled to the voltage dividing circuit; and
> a first capacitor (CD1), comprising a first terminal coupled to the output node, and a second terminal coupled to the second terminal of the diode.

8. The power supply of claim 1, wherein the switching circuit comprises a transistor (BJT1), a first terminal of the transistor is coupled to the voltage dividing circuit, a second terminal of the transistor is coupled to the feedback circuit, and a control terminal of the transistor is coupled to a ground terminal (GND).

9. An operating method of a power supply (100), wherein the power supply is coupled to an output node (ND1) to supply power to a load (LD1), the power supply comprises a power converter (130) coupled to the output node, a feedback circuit (115) coupled to the output node, a control signal generating circuit (117) coupled to the power converter, and a compensating circuit (120) coupled to the output node and the feedback circuit, the compensating circuit comprises a reference voltage circuit (REF1) coupled to the output node, a voltage dividing circuit (DIV1) coupled to the reference voltage circuit, and a switching circuit (SW1) coupled to the voltage dividing circuit and the feedback circuit, and the operating method is **characterized by** comprising:

> by setting the power converter, generating an output voltage (Vout) at the output node according to an input voltage (Vin);
> by setting the feedback circuit, correspondingly generating a feedback signal (FB) according to an output node voltage (VND1) of the output node;
> by setting the control signal generating circuit, correspondingly providing a control signal (Vctrl) to the power converter according to the feedback signal, to generate the output voltage;
> by setting the reference voltage circuit, correspondingly generating a reference voltage (Vref) according to the output node voltage; and
> by setting the voltage dividing circuit, correspondingly generating a divided voltage (Vdiv) according to the reference voltage,
> wherein when the output node voltage is increased from a preset voltage level (Vpre1) to a first voltage level (Vlev1) and is then decreased from the first voltage level to a level threshold (LEV_TH) or decreased from the first voltage level by an amplitude threshold (AM_T1), the switching circuit is conducted to couple the feedback circuit to the voltage dividing circuit, so that the feedback circuit sets the control signal generating circuit to correspondingly increase a duty cycle of the control signal and/or decrease a frequency of the control signal.

10. The operating method of claim 9, further comprising:

> when the output node voltage is decreased, by the feedback circuit, generating the feedback signal to correspondingly increase the duty cycle of the control signal and/or decrease the frequency of the control signal, so that the control signal generation circuit sets the power converter to increase the output voltage.

11. The operating method of claim 10, further comprising:
    when the output node voltage is increased, by the feedback circuit, generating the feedback signal to correspondingly decrease the duty cycle of the control signal and/or increase the frequency of the control signal, so that the control signal generation circuit sets the power converter to decrease the output voltage.

12. The operating method of claim 9 or 11, wherein the feedback circuit comprises a light-emitting diode (LED1), and the operating method further comprises:
    correspondingly generating the feedback signal according to a current flowing through the light-emitting diode.

13. The operating method of claim 9 or 12, wherein the voltage divider circuit comprises a first resistor (RD1) and a second resistor (RD2), the first resistor is coupled to the reference voltage circuit and the switching circuit, the second resistor is arranged between the switching circuit, the first resistor and a ground terminal (GND), and the operating method further comprises:
    when the switching circuit is conducted, by the switching circuit, coupling the second resistor to the feedback circuit to change the current flowing through the light-emitting diode.

14. The operating method of claim 12 or 13, further comprising:
    when the switching circuit is conducted, increasing the current flowing through the light-emitting diode, and increasing, by the control signal generating circuit, the output voltage of the power converter according to the feedback signal.

15. The operating method of claim 9, wherein the reference voltage circuit comprises a diode (D1) and a first capacitor (CD1), the diode comprises a first terminal coupled to the output node and a second terminal coupled to the voltage dividing circuit, the first capacitor comprises a first terminal coupled to the output node and a second terminal coupled to the second terminal of the diode, and the operating method further comprises:

setting a limit voltage value across the first terminal and the second terminal of the diode, to generate the reference voltage at the second terminal of the diode, wherein the limit voltage value is set through a breakdown voltage of the diode and is greater than or equal to the preset voltage level.

**Amended claims in accordance with Rule 137(2) EPC.**

1. A power supply (100), configured to be coupled to an output node (ND1) to supply power to a load (LD1), comprising:

    a power converter (130), configured to generate an output voltage (Vout) at the output node according to an input voltage (Vin);
    a feedback circuit (115), coupled to the output node and configured to correspondingly generate a feedback signal (FB) according to an output node voltage (VND1) of the output node;
    a control signal generating circuit (117), coupled to the power converter, and configured to correspondingly provide a control signal (Vctrl) to the power converter according to the feedback signal to generate the output voltage; and
    a compensating circuit (120), coupled between the output node and the feedback circuit, and comprising:

        a reference voltage circuit (REF1), coupled to the output node, and configured to correspondingly generate a reference voltage (Vref) according to the output node voltage;
        a voltage dividing circuit (DIV1), coupled to the reference voltage circuit, and configured to correspondingly generate a divided voltage (Vdiv) according to the reference voltage; and
        a switching circuit (SWC1), coupled to the voltage dividing circuit and the feedback circuit,

    wherein the power supply (100) is **characterized in that**:

        the feedback circuit generates the feedback signal to correspondingly increase a duty cycle of the control signal and/or decrease a frequency of the control signal, so that the control signal generation circuit sets the power converter to increase the output voltage;

the feedback circuit generates the feedback signal to correspondingly decrease the duty cycle of the control signal and/or increase the frequency of the control signal, so that the control signal generation circuit sets the power converter to decrease the output voltage;

when the output node voltage increases from a preset voltage level (Vpre1) to a first voltage level (Vlev1) and then decreases from the first voltage level to a level threshold (LEV_TH) or decreases from the first voltage level by an amplitude threshold (AM_T1), the switching circuit is conducted to couple the feedback circuit to the voltage dividing circuit, so that the feedback circuit sets the control signal generating circuit to correspondingly increase the duty cycle of the control signal and/or decrease the frequency of the control signal.

2. The power supply of claim 1, wherein the feedback circuit comprises a light-emitting diode (LED1), and the feedback circuit is configured to correspondingly generate the feedback signal according to a current flowing through the light-emitting diode.

3. The power supply of claim 1 or 2, wherein the voltage divider circuit comprises:

    a first resistor (RD1), coupled to the reference voltage circuit and the switching circuit; and
    a second resistor (RD2), arranged between the switching circuit, the first resistor and a ground terminal (GND),
    wherein when the switching circuit is conducted, the switching circuit couples the second resistor to the feedback circuit to change the current flowing through the light-emitting diode.

4. The power supply of claim 2 or 3, wherein when the switching circuit is conducted, the current flowing through the light-emitting diode is increased, and the control signal generating circuit increases the output voltage of the power converter according to the feedback signal.

5. The power supply of claim 1, wherein the reference voltage circuit comprises:

    a diode (D1), comprising a first terminal coupled to the output node and a second terminal coupled to the voltage dividing circuit; and
    a first capacitor (CD1), comprising a first terminal coupled to the output node, and a second terminal coupled to the second terminal of the diode.

6. The power supply of claim 1, wherein the switching circuit comprises a transistor (BJT1), a first terminal of the transistor is coupled to the voltage dividing circuit, a second terminal of the transistor is coupled to the feedback circuit, and a control terminal of the transistor is coupled to a ground terminal (GND).

7. An operating method of a power supply (100), wherein the power supply is coupled to an output node (ND1) to supply power to a load (LD1), the power supply comprises a power converter (130) coupled to the output node, a feedback circuit (115) coupled to the output node, a control signal generating circuit (117) coupled to the power converter, and a compensating circuit (120) coupled to the output node and the feedback circuit, the compensating circuit comprises a reference voltage circuit (REF1) coupled to the output node, a voltage dividing circuit (DIV1) coupled to the reference voltage circuit, and a switching circuit (SW1) coupled to the voltage dividing circuit and the feedback circuit, and the operating method comprises:

by setting the power converter, generating an output voltage (Vout) at the output node according to an input voltage (Vin);
by setting the feedback circuit, correspondingly generating a feedback signal (FB) according to an output node voltage (VND1) of the output node;
by setting the control signal generating circuit, correspondingly providing a control signal (Vctrl) to the power converter according to the feedback signal, to generate the output voltage;
by setting the reference voltage circuit, correspondingly generating a reference voltage (Vref) according to the output node voltage; and
by setting the voltage dividing circuit, correspondingly generating a divided voltage (Vdiv) according to the reference voltage;
wherein the operating method is **characterized by** further comprising:

by the feedback circuit, generating the feedback signal to correspondingly increase a duty cycle of the control signal and/or decrease a frequency of the control signal, so that the control signal generation circuit sets the power converter to increase the output voltage; and
by the feedback circuit, generating the feedback signal to correspondingly decrease the duty cycle of the control signal and/or increase the frequency of the control signal, so that the control signal generation circuit sets the power converter to decrease the output voltage,
when the output node voltage is increased from a preset voltage level (Vpre1) to a first voltage level (Vlev1) and is then decreased from the first voltage level to a level threshold (LEV_TH) or decreased from the first voltage level by an amplitude threshold (AM_T1), the switching circuit is conducted to couple the feedback circuit to the voltage dividing circuit, so that the feedback circuit sets the control signal generating circuit to correspondingly increase the duty cycle of the control signal and/or decrease the frequency of the control signal.

8. The operating method of claim 7, wherein the feedback circuit comprises a light-emitting diode (LED1), and the operating method further comprises:

correspondingly generating the feedback signal according to a current flowing through the light-emitting diode.

9. The operating method of claim 7 or 8, wherein the voltage divider circuit comprises a first resistor (RD1) and a second resistor (RD2), the first resistor is coupled to the reference voltage circuit and the switching circuit, the second resistor is arranged between the switching circuit, the first resistor and a ground terminal (GND), and the operating method further comprises:

when the switching circuit is conducted, by the switching circuit, coupling the second resistor to the feedback circuit to change the current flowing through the light-emitting diode.

10. The operating method of claim 8 or 9, further comprising:

when the switching circuit is conducted, increasing the current flowing through the light-emitting diode, and increasing, by the control signal generating circuit, the output voltage of the power converter according to the feedback signal.

11. The operating method of claim 7, wherein the reference voltage circuit comprises a diode (D1) and a first capacitor (CD1), the diode comprises a first terminal coupled to the output node and a second terminal coupled to the voltage dividing circuit, the first capacitor comprises a first terminal coupled to the output node and a second terminal coupled to the second terminal of the diode, and the operating method further comprises:

setting a limit voltage value across the first terminal and the second terminal of the diode, to generate the reference voltage at the second terminal of the diode, wherein the limit voltage value is set through a breakdown voltage of the diode and is greater than or equal to the preset voltage level.

100

LD1

PSU1

Vin

130 Power Converter

Vout VND1 ND1

Load

Vctrl

Control Signal Generating Circuit

FB

115

Feedback Circuit

117

Compensating Circuit

120

PSU2

PSU3

Fig. 1

EP 4 738 672 A1

Fig. 2A

Fig. 2B

VND1

ND1

120

Reference
Voltage Circuit — REF1

Vref

Voltage
Dividing
Circuit

Vdiv

Switching
Circuit

SWC1

115

Feedback
Circuit

FB

DIV1

Fig. 3

Fig. 4

Fig. 5

# EUROPEAN SEARCH REPORT

**Application Number**

EP 25 15 3122

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TW I 817 460 B (ACER INC [TW]) 1 October 2023 (2023-10-01) | 1-6,9-14 | INV. H02M1/00 |
| A | * figure 2 * * paragraph [0016] - paragraph [0031] * | 7,8,15 | H02M3/156 |
| A | CN 103 887 971 A (TEXAS INSTRUMENTS INC) 25 June 2014 (2014-06-25) * figure 5 * | 1-15 | |
| A | US 2005/099165 A1 (TANI KATSUHIKO [JP]) 12 May 2005 (2005-05-12) * figure 2 * | 1-15 | |

**TECHNICAL FIELDS SEARCHED (IPC)**

H02M

The present search report has been drawn up for all claims

| Place of search | Date of completion of the search | Examiner |
|---|---|---|
| The Hague | 4 June 2025 | Riehl, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                    
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 3122

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2025

| Patent document cited in search report | | Publication date | Patent family member(s) | | Publication date |
|---|---|---|---|---|---|
| TW I817460 | B | 01-10-2023 | NONE | | |
| CN 103887971 | A | 25-06-2014 | NONE | | |
| US 2005099165 | A1 | 12-05-2005 | JP | 2005143249 A | 02-06-2005 |
| | | | US | 2005099165 A1 | 12-05-2005 |

EPO FORM P0459

For more details about this annex : see Official Journal of the European Patent Office, No. 12/82